(19) Europäisches Patentamt
European Patent Office
Office européen des brevets

(11) **EP 4 664 068 A1**

(12) **EUROPEAN PATENT APPLICATION**

(43) Date of publication:
**17.12.2025 Bulletin 2025/51**

(21) Application number: **24215134.8**

(22) Date of filing: **25.11.2024**

(51) International Patent Classification (IPC):
*G01C 11/02* (2006.01)   *G01C 11/04* (2006.01)
*G01S 17/02* (2020.01)   *G06T 7/73* (2017.01)
*G06V 10/40* (2022.01)   *G06V 10/82* (2022.01)
*G06V 20/56* (2022.01)   *G08G 5/54* (2025.01)
*G08G 5/55* (2025.01)   *G08G 5/57* (2025.01)

(52) Cooperative Patent Classification (CPC):
**G01C 11/04; B64D 45/04; B64D 45/08;
B64D 47/08; G01C 11/02; G06T 7/74; G06V 10/82;
G06V 20/58; G08G 5/54; G08G 5/55; G08G 5/57**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2024 KR 20240077737**

(71) Applicants:
• **Hyundai Motor Company**
**Seoul 06797 (KR)**
• **Kia Corporation**
**Seocho-gu
Seoul 06797 (KR)**

(72) Inventors:
• **LIM, Jun Young**
**18280 Hwaseong-si (KR)**
• **MOON, Gun Hee**
**18280 Hwaseong-si (KR)**
• **RYU, Hyun Jee**
**18280 Hwaseong-si (KR)**

(74) Representative: **Viering, Jentschura & Partner
mbB
Patent- und Rechtsanwälte
Am Brauhaus 8
01099 Dresden (DE)**

(54) **APPARATUS FOR CONTROLLING  MOBILITY APPARATUS AND METHOD THEREOF**

(57)     An apparatus for controlling mobility apparatus and a method thereof. The apparatus can include an imaging device loaded into the mobility apparatus and a processor configured to detect a reference object from an image obtained by the mobility apparatus in response to certain non-image-based position information (e.g., GPS information) of the mobility apparatus being unavailable, obtain image-based position information of the mobility apparatus based on a relative position of the mobility apparatus with respect to the reference object, and determine whether the mobility apparatus departs from a course based on the image-based position information of the mobility apparatus.

FIG.1

EP 4 664 068 A1

**Description**

**CROSS-REFERENCE TO RELATED APPLICATIONS**

This application claims the benefit of priority to Korean Patent Application No. 10-2024-0077737, filed in the Korean Intellectual Property Office on June 14, 2024, the entire contents of which are incorporated herein by reference.

**TECHNICAL FIELD**

The present disclosure relates to an apparatus for controlling a mobility apparatus and a method thereof.

**BACKGROUND**

Research on mobility apparatus has been actively conducted for future traffic and transportation systems. As the mobility apparatus rapidly increases, the importance of safe navigation of the mobility apparatus is being emphasized.
The mobility apparatus is based on frequently identifying a flight position for safe navigation. To this end, it is common for the mobility apparatus to determine a position at which the mobility apparatus is in service, using a global positioning system (GPS).
However, when a jamming situation of the GPS occurs or an error in GPS occurs, it may be impossible to obtain position information by use of the GPS.
Thus, there is a need for a method for supplementing the GPS and determining a position of mobility apparatus.

**SUMMARY**

The present disclosure relates to an apparatus for controlling a mobility apparatus and a method thereof, and more particularly, relates to technologies capable of determining a position of the mobility apparatus and controlling a flight of the mobility apparatus based on the position of the mobility apparatus.
An embodiment of the present disclosure can solve the above-mentioned problems occurring in the prior art while advantages achieved by the prior art are maintained intact.
An embodiment of the present disclosure can provide a flight control apparatus for determining a position of a mobility apparatus, even when there is a defect in GPS signal, and a method thereof.
An embodiment of the present disclosure can provide a flight control apparatus for determining a position of a mobility apparatus, even when it is impossible to determine a flight position using a GPS signal, and a method thereof.
An embodiment of the present disclosure can provide a flight control apparatus for preventing mobility apparatus from departing from a course, even when it is impossible to determine a flight position using a GPS signal, and a method thereof.
Technical problems to be solved by embodiments of the present disclosure are not necessarily limited to the aforementioned problems, and solution to other technical problems not mentioned herein with an embodiment of the present disclosure can be understood from the following description by those skilled in the art to which the present disclosure pertains.
According to an embodiment of the present disclosure, an apparatus for controlling a mobility apparatus may include a camera loaded into the mobility apparatus and a processor that can be configured to detect a reference object from an image obtained by the mobility apparatus in response to that it is impossible to identify position information of the mobility apparatus, obtain the position information of the mobility apparatus based on a relative position of the mobility apparatus with respect to the reference object, and determine whether the mobility apparatus departs from a course based on the position information of the mobility apparatus.
According to an embodiment, the processor may be configured to detect objects from the image and may determine a landmark to which the position information is matched among the objects as the reference object.
According to an embodiment, the processor may be configured to transform the image into a top-view image and may determine the relative position of the mobility apparatus with respect to the reference object on the top-view image.
According to an embodiment, the processor may be configured to determine a height of the mobility apparatus from the ground on which the reference object is located on the top-view image and may determine the relative position of the mobility apparatus with respect to the reference object, based on determining an x-axis separation distance and a y-axis separation distance from the reference object to the mobility apparatus.
According to an embodiment, the processor may be configured to determine position coordinates of the mobility apparatus on the top-view image, based on the height of the mobility apparatus, the x-axis separation distance, and the y-axis separation distance.
According to an embodiment, the processor may be configured to obtain a first straight line based on first and second reference points matched to a reference target, may obtain a second straight line based on third and fourth reference points matched to the reference target, and may determine whether the mobility apparatus departs from the course based on determining an area in the first straight line and the second straight line as the course.

According to an embodiment, the processor may be configured to determine whether the mobility apparatus departs from the course based on that an x-intercept of the first straight line and an x-intercept of the second straight line are the same sign, when setting a position of the mobility apparatus to the origin on the top-view image.

According to an embodiment, the processor may be configured to determine a center line connecting x-axis average values of the first straight line and the second straight line, may control the mobility apparatus to turn in a first direction in the direction of the center line during a first duration, may control the mobility apparatus to turn in a second direction that is an opposite direction to the first direction during a second duration, and may control the mobility apparatus to perform straight line motion along the center line from a return point at which the mobility apparatus reaches the center line.

According to an embodiment, the processor may be configured to set a section in which the mobility apparatus turns in the first direction and a section in which the mobility apparatus turns in the second direction to be the same as each other.

According to an embodiment, the processor may be configured to provide a notification of the position information of the mobility apparatus that obtains the image and the course by use of a display.

According to an embodiment of the present disclosure, a method for controlling a mobility apparatus may include detecting a reference object from an image obtained by the mobility apparatus, in response to that it is impossible to identify position information of the mobility apparatus, obtaining the position information of the mobility apparatus, based on a relative position of the mobility apparatus with respect to the reference object, and determining whether the mobility apparatus departs from a course, based on the position information of the mobility apparatus.

According to an embodiment, the detecting of the reference object may include detecting objects from the image and extracting a landmark to which the position information is matched among the objects.

According to an embodiment, the determining of the relative position with respect to the reference object may include transforming the image into a top-view image and determining the relative position on the top-view image.

According to an embodiment, the determining of the relative position with respect to the reference object may include determining a height of the mobility apparatus from the ground on which the reference object is located on the top-view image and determining an x-axis separation distance and a y-axis separation distance from the reference object to the mobility apparatus.

According to an embodiment, the obtaining of the position information of the mobility apparatus may include determining position coordinates of the mobility apparatus on the top-view image, based on the height of the mobility apparatus, the x-axis separation distance, and the y-axis separation distance.

According to an embodiment, the determining of whether the mobility apparatus departs from the course may include obtaining a first straight line based on first and second reference points matched to a reference target, obtaining a second straight line based on third and fourth reference points matched to the reference target, and determining an area in the first straight line and the second straight line as the course.

According to an embodiment, the determining of whether the mobility apparatus departs from the course may include setting a position of the mobility apparatus to the origin on the top-view image and determining whether the mobility apparatus departs from the course, based on that an x-intercept of the first straight line and an x-intercept of the second straight line are the same sign.

According to an embodiment, the method may further include determining a center line connecting x-axis average values of the first straight line and the second straight line, in response to determining that the mobility apparatus departs from the course, controlling the mobility apparatus to turn in a first direction in the direction of the center line during a first duration, controlling the mobility apparatus to turn in a second direction which is an opposite direction to the first direction during a second duration, and controlling the mobility apparatus to perform straight line motion along the center line from a return point at which the mobility apparatus reaches the center line.

According to an embodiment, the controlling of the mobility apparatus may include setting a section in which the mobility apparatus turns in the first direction and a section in which the mobility apparatus turns in the second direction to be the same as each other.

According to an embodiment, the method may further include providing a notification of the position information of the mobility apparatus which obtains the image and the course by use of a display.

## BRIEF DESCRIPTION OF THE DRAWINGS

The above and other features and advantages of embodiments of the present disclosure can be more apparent from the following detailed description taken in conjunction with the accompanying drawings, in which:

FIG. 1 a block diagram illustrating a configuration of a flight control apparatus according to an embodiment of the present disclosure;

FIG. 2 is a drawing for schematically describing a flight control method according to an embodiment of the present disclosure;

FIG. 3 is a flowchart for describing a flight control method according to an embodiment of the present disclosure;

FIG. 4 is a drawing for setting an image coordinate system according to an embodiment of the present disclosure;

FIG. 5 is a drawing for describing roll, pitch, and yaw of mobility apparatus and a camera tilting angle;

FIGS. 6A, 6B, and 6C are drawings for describing changes in vanishing point and vanishing line;

FIGS. 7A and 7B are drawings for describing a position of a vanishing point according to pitch of mobility apparatus;

FIG. 8 is a drawing for describing a method for determining a relative position between a reference object and mobility apparatus according to an embodiment of the present disclosure;

FIG. 9 is a drawing for describing a method for determining departure from a course of mobility apparatus, according to an embodiment of the present disclosure;

FIG. 10 is a drawing for describing return to a course of mobility apparatus, according to an embodiment of the present disclosure; and

FIG. 11 is a drawing illustrating a computing system according to an embodiment of the present disclosure.

## DETAILED DESCRIPTION OF ILLUSTRATIVE EMBODIMENTS

Hereinafter, some example embodiments of the present disclosure will be described in detail with reference to the drawings. In adding reference numerals to the components of each drawing, it can be noted that identical components can be designated by identical numerals even when they are displayed on different drawings. A detailed description of well-known features or functions can be ruled out to not unnecessarily obscure the gist of the present disclosure.

In describing the components of the example embodiments of the present disclosure, terms such as "first," "second," "A," "B," "(a)," "(b)," and the like, may be used. These terms can be used merely to distinguish one element from another element, and do not necessarily limit the corresponding elements irrespective of the order or priority of the corresponding elements. Furthermore, unless otherwise defined, terms including technical and scientific terms used herein can have a same meaning as being generally understood by those skilled in the art to which the present disclosure pertains. Such terms as those defined in a generally used dictionary can be interpreted as having meanings equal to the contextual meanings in the relevant field of art, and are not to be interpreted as having ideal or excessively formal meanings unless clearly defined as having such in the present application.

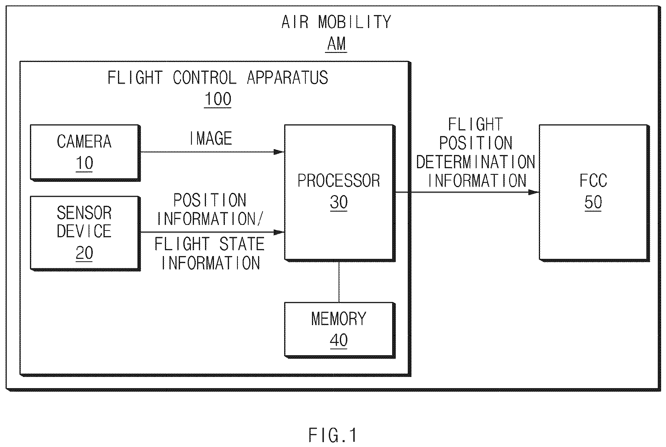

Hereinafter, example embodiments of the present disclosure will be described in detail with reference to FIGS. 1 to 11.

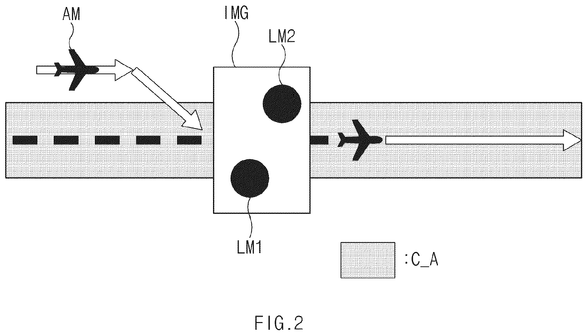

FIG. 1 a block diagram illustrating a configuration of a flight control apparatus according to an embodiment of the present disclosure. FIG. 2 is a drawing for schematically describing a flight control method according to an embodiment of the present disclosure.

A flight control apparatus 100 according to an embodiment of the present disclosure will be described with reference to FIGS. 1 and 2.

A flight control apparatus 100 according to an embodiment of the present disclosure may include a camera 10, a sensor device 20, a processor 30, and a memory 40. The flight control apparatus 100 may be configured to obtain position information of a runway. The position information of the runway, which can be obtained by the flight control apparatus 100, may be provided to a flight control computer (FCC) 50.

The camera 10 may be configured to obtain an image for a heading direction of mobility apparatus AM. For example, the camera 10 may be located at a position at which it may capture a forward direction on a lower portion of the mobility apparatus AM. The image obtained by the camera 10 may be used in a process of detecting an object on the ground.

The sensor device 20 may obtain position information and airframe state information.

The sensor device 20 may include a global positioning system (GPS) receiver and a 3-axis acceleration sensor.

The GPS receiver may receive signals from GPS satellites and may determine a position based on a time difference between the received signals.

The 3-axis acceleration sensor may obtain flight state information including yaw, pitch, and roll of the mobility apparatus AM.

The processor 30 may identify position information of the mobility apparatus AM in real time. When the position information is not identified by use of a GPS, the processor 30 may obtain an image by use of the camera 10. The processor 30 may detect landmarks LM1 and LM2 from an image IMG and may use the landmarks LM1 and LM2 as reference objects to obtain position information of the mobility apparatus AM. The processor 30 may display a course C_A and a flight position of the mobility apparatus AM on a display or the like.

The processor 30 may determine whether the mobility apparatus AM departs from the course C_A, based on the position information of the mobility apparatus AM. When it is determined that the mobility apparatus AM departs from the course C_A, the processor 30 may provide a notification of course departure by use of the display.

In some embodiments, when the mobility apparatus AM departs from the course C_A, the processor 30 may control the mobility apparatus AM to return to the course C_A.

The memory 40 (or storage medium) may store an algorithm for an operation of the processor 30 and an artificial intelligence (AI) processor. The memory 40 may use a hard disk drive, a flash memory, an electrically erasable programmable read-only memory (EEPROM), a static random access memory (SRAM), a ferro-electric RAM (FRAM), a phase-change RAM (PRAM), a magnetic RAM (MRAM), a dynamic RAM (DRAM), a synchronous DRAM (SDRAM), a double date rate-SDRAM (DDR-SDRAM), or the like, or any combination thereof, for example.

The FCC 50 may control the mobility apparatus AM based on the position information of the runway, and may control, for example, an engine, a motor, or the like, or any combination thereof, for example.

Some of the functions of the FCC 50 may be a configuration included in the processor 30. For example, the processor 30 may control flight of the mobility apparatus AM, based on that the mobility apparatus AM departs from the course.

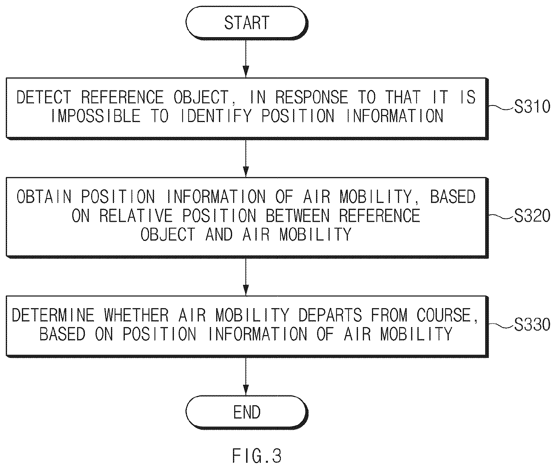

FIG. 3 is a flowchart for describing a flight control method according to an embodiment of the present disclosure. FIG. 3 may be procedures controlled by a processor 30 and/or an FCC 50. A flight control method according to an embodiment of the present disclosure will be described with reference to FIG. 3.

In operation S310, the processor 30 may detect a reference object from an image obtained by mobility apparatus AM, in response to identifying position information of the mobility apparatus AM being impossible.

The processor 30 may control a camera 10 and may receive an image captured by the camera 10 as image data. The processor 30 may detect objects from the image. The processor 30 may perform artificial intelligence (AI) learning of the image data to detect an object from the image. The processor 30 may include an AI processor. The AI processor may train a neural network using a previously stored program and/or data. The neural network for detecting a target vehicle and a dangerous vehicle may include a plurality of network nodes having weights, which may be designed to simulate a human brain structure on the computer and may simulate neurons of the human neural network. The plurality of network nodes may transmit and receive data depending on each connection relationship to simulate the synaptic activity of neurons that transmit and receive signals through the synapse. The neural network may include a deep learning model developed from a neural network model. The plurality of network nodes in the deep learning model may be located on different layers to transmit and receive data depending on a convolution connection relationship. An example of the neural network model may include various deep learning techniques such as deep neural networks (DNN), convolutional deep neural networks (CNN), a recurrent neural network (RNN), a restricted Boltzmann machine (RBM), deep belief networks (DBN), a deep Q-network, or any combination thereof, for example.

The processor 30 may detect a reference object among objects. The reference object may be a landmark to which position information is matched. The position information may be a coordinates value. The landmark and position information matched to the landmark may be stored in a memory 40. In other words, when the reference object obtained through image learning is a predetermined landmark, the processor 30 may extract position information matched to the landmark from the memory 40.

In operation S320, the processor 30 may obtain position information of the mobility apparatus AM, based on a relative position between the reference object and the mobility apparatus AM.

The processor 30 may transform the image obtained by the camera 10 into a top-view image to determine the relative position of the mobility apparatus AM.

The processor 30 may determine the relative position between the reference object and the mobility apparatus AM on the top-view image. The relative position between the reference object and the mobility apparatus AM may be represented as image coordinates on the top-view image.

The relative position between the reference object and the mobility apparatus AM may include a height of the mobility apparatus AM from the ground on which the reference object is located and an x-axis separation distance and a y-axis separation distance between the reference object and the mobility apparatus AM.

The processor 30 may know position information of the reference object by use of the memory 40 and may determine position information of the mobility apparatus AM on an image coordinate system, based on the relative position between the reference object and the mobility apparatus AM.

In operation S330, the processor 30 may determine whether the mobility apparatus AM departs from a course C_A, based on the position information of the mobility apparatus AM.

The processor 30 may represent the course C_A as coordinates on the image coordinate system. The processor 30 may detect random first to fourth reference points that belong to the course C_A and may determine two straight lines based on the four reference points. The processor 30 may determine an area in the two straight lines as the course C_A.

Next, the processor 30 may determine whether the position information of the mobility apparatus AM, which can be obtained in operation S320, is included in the course C_A.

The processor 30 may provide a notification of the mobility apparatus AM and the course C_A by use of the display or the like.

When the mobility apparatus AM departs from the course C_A, the processor 30 may display a warning on the display or the like.

When the mobility apparatus AM departs from the course C_A, the processor 30 may transmit a control signal to an FCC 50 to reset a flight path of the mobility apparatus AM. Alternatively, when the mobility apparatus AM departs from the course C_A, the processor 30 may reset a flight path of the mobility apparatus AM.

Hereinafter, a flight control method according to an embodiment of the present disclosure will be described in detail.

The processor 30 may use an image coordinate system to determine the relative position between the reference object and the mobility apparatus AM.

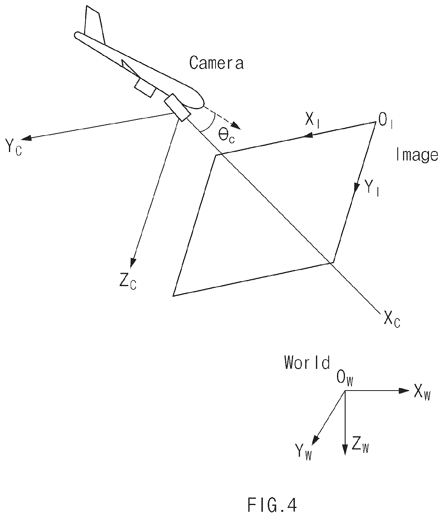

FIG. 4 is a drawing for setting an image coordinate system according to an embodiment of the present disclosure.

Referring to FIG. 4, the image coordinate system may be a two-dimensional (2D) coordinate system of an image obtained by a camera 10 and may include an $X_1$-axis and $Y_1$-axis around the origin $O_I$ of a right upper end.

A processor 30 may transform the image obtained by the camera 10 into a top-view image, using a transform matrix.

The transform matrix may be obtained using a transform matrix generation function. The transform matrix generation function may be a function for transforming four source points (src) into target points on the image.

The transform matrix may be determined based on roll, pitch, and yaw of the mobility apparatus AM and a camera tilting angle.

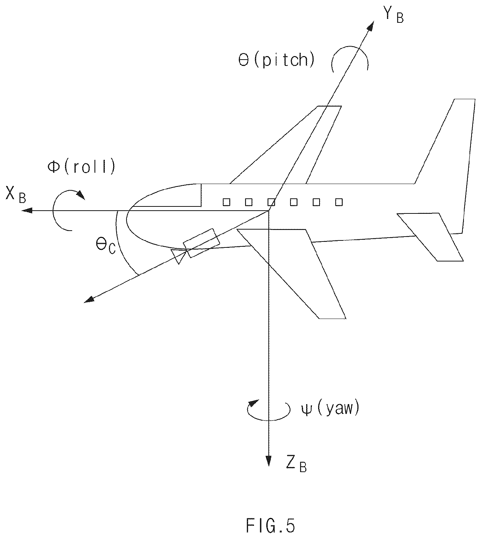

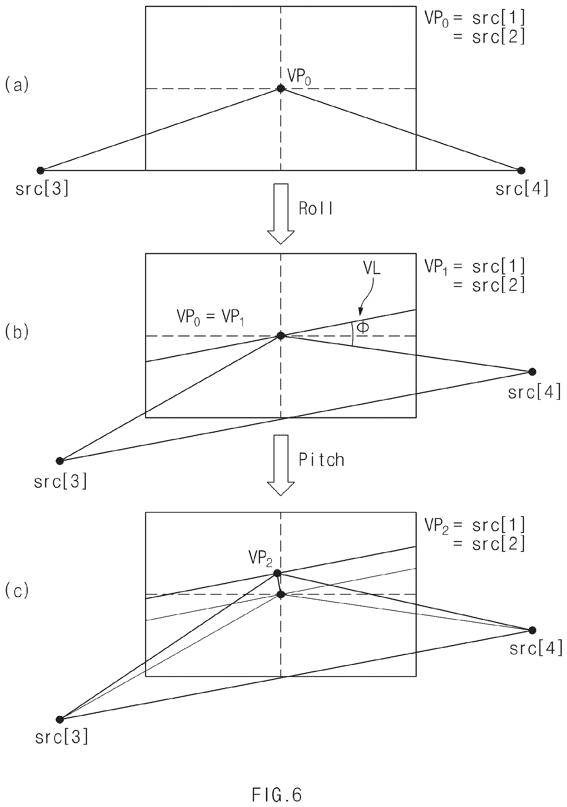

FIG. 5 is a drawing for describing roll, pitch, and yaw of mobility apparatus and a camera tilting angle. FIGS. 6A to 6C are drawings for describing changes in vanishing point and vanishing line. A description will be given of a flight state of mobility apparatus and changes in vanishing point and vanishing line according to the flight state with reference to FIGS. 5 to 6C.

An $X_B$-axis, a $Y_B$-axis, and a $Z_B$-axis shown in FIG. 5 may be three axes for defining a body coordinate system of mobility apparatus AM. The $X_B$-axis may be a longitudinal axis of the mobility apparatus AM, and the $Y_B$-axis may be a lateral axis of the mobility apparatus AM. The $Z_B$-axis may be a vertical axis of the mobility apparatus AM.

Referring to FIG. 5, roll $\Phi$ of the mobility apparatus AM may refer to a rotational angle around the $X_B$-axis and pitch $\theta$ of the mobility apparatus AM may refer to a rotational angle around the $Y_B$-axis. Yaw $\Psi$ of the mobility apparatus AM may refer to a rotational angle around the $Z_B$-axis of the mobility apparatus AM.

FIG. 6A is a drawing illustrating a vanishing point and a vanishing line in a state in which there are no roll and pitch. FIG. 6B is a drawing for describing changes in vanishing point and vanishing line depending on roll of mobility apparatus. FIG. 6C is a drawing for describing a vanishing point and a vanishing line depending to pitch of mobility apparatus.

First to fourth source points src1 to src4 in FIG. 6A may be reference points used in a process of obtaining a bird's eye view (BEV) image. FIG. 6A illustrates that the first source point src1 and the second source point src2 are identical to a vanishing point $VP_o$. The vanishing point $VP_o$ may be a principal point of an image. The third source point src3 and the fourth source point src4 may be points at both ends on the front of a first image.

As shown in FIG. 6B, it may be seen that the vanishing point $VP_o$ when there is no roll and the vanishing point $VP_o$ when roll is generated are the same as each other. A vanishing line VL may vary with roll $\phi$.

As shown in FIG. 6C, the vanishing line VL may be changed by pitch.

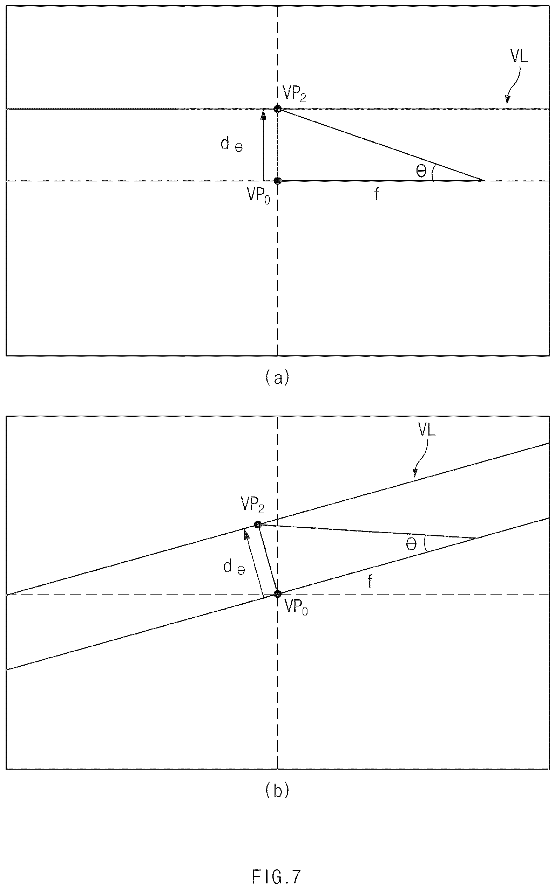

FIGS. 7A and 7B are drawings for describing a position of a vanishing point according to pitch of mobility apparatus. FIG. 7A is a drawing for describing a state in which roll is o (zero). FIG. 7B is a drawing for describing a state in which roll is not o (zero).

As shown in FIG. 7A, when there is no roll of mobility apparatus AM, a camera tilt angle $\theta_{tilt}$ may be determined by a y-coordinate $V_y$ of a vanishing line VL and a camera principal point ($C_x$, $C_y$). The camera tilt angle $\theta_{tilt}$ may be an angle between an xy plane of a world coordinate system and a camera 10. The camera tilt angle $\theta_{tilt}$ on the world coordinate system may be represented as "$\theta + \theta_c$". $\theta$ may be pitch of the mobility apparatus AM. $\theta_c$ may refer to a camera tilt on a body coordinate system and may refer to an angle between an xy plane on the body coordinate system and the camera 10.

As shown in FIG. 7B, when there is the roll of the mobility apparatus AM, a vanishing line VL may move perpendicular to the roll depending on the pitch θ.

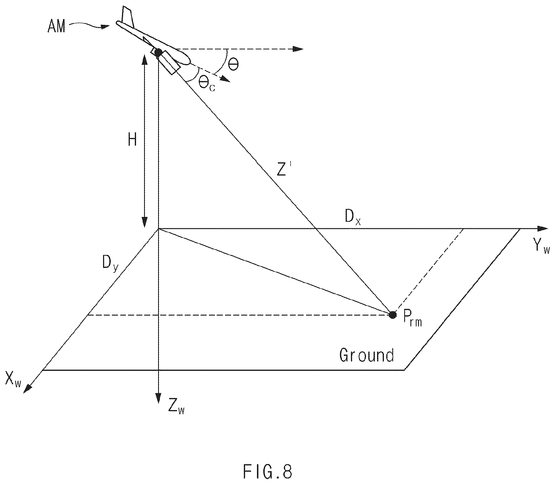

FIG. 8 is a drawing for describing a method for determining a relative position between a reference object and mobility apparatus according to an embodiment of the present disclosure.

Referring to FIG. 8, a processor 30 may determine a relative position between mobility apparatus AM and a reference object on an image coordinate system.

The processor 30 may identify position information matched to a reference object and may transform the position information into reference object coordinates $P_{rm}$, of the image coordinate system. The position information of the reference object may be a universal transverse Mercator (UTM) coordinate system including latitude and longitude.

The processor 30 may transform the position information of the reference object into reference object coordinates $P_{rm}$, of the image coordinate system, using a transform matrix T represented as Equation 1 below.

[Equation 1]

$$T = \begin{pmatrix} P_{11} & P_{12} & P_{13} \\ P_{21} & P_{22} & P_{23} \\ P_{31} & P_{32} & P_{33} \end{pmatrix}$$

The relative position between the mobility apparatus AM and the reference object coordinates $P_{rm}$ may be represented as follows.

The distance d between the mobility apparatus AM and the reference object coordinates $P_{rm}$ may be represented as Equation 2 below.

[Equation 2]

$$d = h \times \tan(\theta + \theta_c) \times \frac{f_x + f_y}{2}$$

In Equation 2 above, h may refer to the height from the reference object and the mobility apparatus AM, $f_x$ may refer to the focal length in the x-axis direction, and $f_y$ may refer to the focal length in the y-axis direction.

Furthermore, the processor 30 may determine an x-axis separation distance and a y-axis separation distance of the mobility apparatus AM, based on Equation 3 below.

[Equation 3]

$$d_x = d * \cos(\phi)$$

$$d_y = d * \sin(\phi)$$

$d_x$ may be the x-axis separation distance of the mobility apparatus AM from the reference object coordinates $P_{rm}$ on the image coordinate system, and $d_y$ may be the y-axis separation distance of the mobility apparatus AM from the reference object coordinates $P_{rm}$ on the image coordinate system.

The processor 30 may obtain coordinates of the mobility apparatus AM from the image coordinate system, as in Equation 4 below, based on the relative position between the reference object coordinates $P_{rm}$ and the mobility apparatus AM, which is obtained based on Equations 2 and 3 above.

[Equation 4]

$$w \begin{pmatrix} x' \\ y' \\ 1 \end{pmatrix} = T \begin{pmatrix} x - d_x \\ y - d_y \\ 1 \end{pmatrix} = \begin{pmatrix} P_{11} & P_{12} & P_{13} \\ P_{21} & P_{22} & P_{23} \\ P_{31} & P_{32} & P_{33} \end{pmatrix} \begin{pmatrix} x - d_x \\ y - d_y \\ 1 \end{pmatrix}$$

In Equation 4 above, w may be the scale factor for correcting the scale in the coordinate transform process. The scale factor may include a scale for correcting a change in perspective according to a change in height of the mobility apparatus AM on the image coordinate system. x' may refer to the x-coordinate of the mobility apparatus AM on the image coordinate system, and y' may refer to the y-coordinate of the mobility apparatus AM on the image coordinate system. x may refer to the x-coordinate of the reference object coordinates $P_{rm}$ on the image coordinate system, and y may refer to the y-coordinate of the reference object coordinates $P_{rm}$ on the image coordinate system.

A description will be given in detail of a method for determining whether the mobility apparatus AM departs from a course C_A based on position information of the mobility apparatus AM and the course C_A on the image coordinate system.

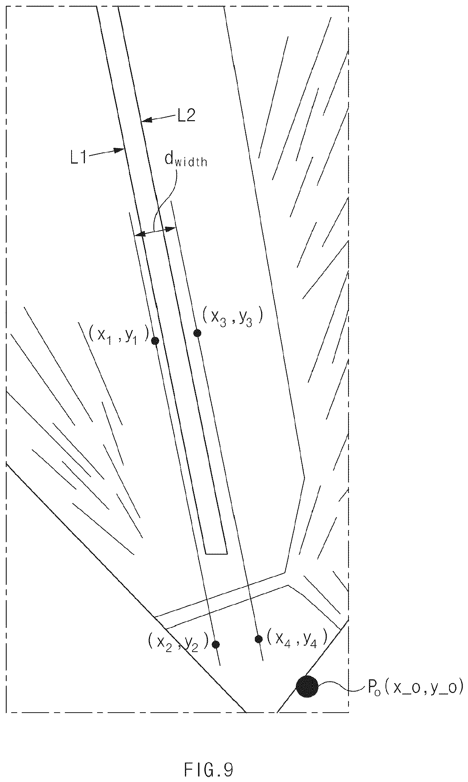

FIG. 9 is a drawing for describing a method for determining departure from a course of mobility apparatus.

Referring to FIG. 9, a processor 30 may represent a course on an image coordinate system. FIG. 9 illustrates an embodiment of determining an area between a first straight line L1 and a second straight line L2 as a course.

The middle point $P_o$ on the image coordinate system of FIG. 9 may refer to a position of mobility apparatus AM. In other words, the image coordinate system shown in FIG. 9 may be to move coordinates (x', y') of the mobility apparatus AM, which can be obtained based on Equation 4 above, to the center of the image coordinate system in parallel. The middle point $P_o$ of the image coordinate system may be set to the origin in an embodiment of the present disclosure.

To represent a course C_A on the image coordinate system, the processor 30 may obtain first to fourth reference points P1, P2, P3, and P4. The first to fourth reference points P1, P2, P3, and P4 may be set to determine a course and may matched to a reference target to be stored. For example, when detecting the reference target from an image obtained by a camera 10, the processor 30 may search for the first to fourth reference points P1, P2, P3, and P4 matched to the reference target.

The first reference point P1 and the second reference point P2 may be to determine the first straight line L1, and the third reference point P3 and the fourth reference point P4 may be to determine the second straight line L2. In other words, the processor 30 may determine a straight line connecting the first reference point P1 with the second reference point P2 as the first straight line L1 and may determine a straight line connecting the third reference point P3 with the fourth reference point P4 as the straight line L2.

The processor 30 may define an area in the first straight line L1 and the second straight line L2 as a course.

The processor 30 may set a position of the mobility apparatus AM to the origin (0,0) on the image coordinate system. Furthermore, the processor 30 may determine an x-intercept of the first straight line L1 and an x-intercept of the second straight line L2.

The processor 30 may determine that the mobility apparatus AM departs from the course, based on that the x-intercept of the first straight line L1 and the x-intercept of the second straight line L2 are the same sign. For example, the case in which both the x-intercept of the first straight line L1 and the x-intercept of the second straight line L2 are minus (-) or both the x-intercept of the first straight line L1 and the x-intercept of the second straight line L2 are plus (+) may refer to a state in which the mobility apparatus AM departs from the course.

The processor 30 may determine that the mobility apparatus AM is located within the course, based on that the x-intercept of the first straight line L1 and the x-intercept of the second straight line L2 are opposite signs.

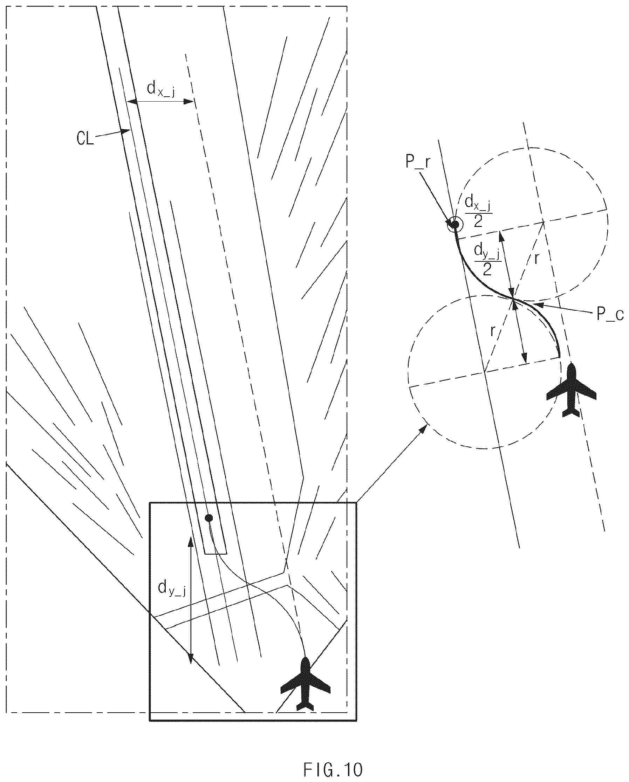

FIG. 10 is a drawing for describing return to a course of mobility apparatus.

Referring to FIG. 10, a processor 30 may control mobility apparatus AM to return to a center line CL of a course. The center line CL of the course may be a straight line connecting average values of x-axis coordinates of a first straight line L1 and a second straight line L2.

The processor 30 may return the mobility apparatus AM to the center line CL through two consecutive turning movements. For example, as shown in FIG. 10, when the mobility apparatus AM departs in a right direction of the course, it may perform a turning movement in a left direction of the course and may perform a turning movement in the right direction of the course to be controlled to follow the course.

A turning rate for the turning movement may be preset and may be set to, for example, 3%. A flight speed may be kept constant during the turning movement. Thus, a return path in the form of S due to the two turning movements may be determined.

A radius r of the return path may be represented as Equation 5 below.

[Equation 5]

$$r = \frac{v}{w}$$

In Equation 5, $v$ may be the speed of the mobility apparatus AM, and w may refer to the turning rate.

Furthermore, a middle point P_c for changing the turning movement on the return path may be a middle point between the turning movement in the left direction and the turning movement in the right direction.

The center line CL of the course and an x-axis deviation $d_{x\_j}$ of the mobility apparatus AM may be determined using coordinates.

A y-axis deviation $d_{y\_j}$ at a return point P_r where the mobility apparatus AM reaches the center line CL of the course may be a y-axis coordinate at an intersection point of a curve indicating the return path and the center line CL of the course.

The y-axis deviation $d_{y\_j}$ obtained by calculating the intersection point of the return path and the center line CL of the course may be represented as Equation 6 below.

[Equation 6]

$$d_{y\_j} = 2\sqrt{rd_{x\_j} - \frac{d_{x\_j}}{4}} + \alpha, \ (\alpha > 0)$$

In Equation 6 above, $\alpha$ may be a coefficient for adjusting a sudden change in the mobility apparatus AM.

The processor 30 may control the mobility apparatus AM to return to the course and may continuously monitor reception of a GPS signal.

Next, the processor 30 may proceed with a procedure of determining whether the mobility apparatus AM departs from the course based on image, based on that it is impossible to receive a GPS signal.

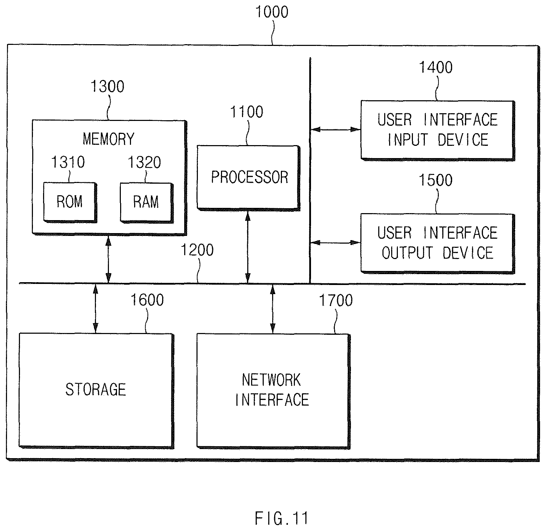

FIG. 11 illustrates a computing system according to an embodiment of the present disclosure.

Referring to FIG. 11, a computing system 1000 may include at least one processor 1100, a memory 1300, a user interface input device 1400, a user interface output device 1500, a storage 1600, and a network interface 1700, which are connected with each other via a bus 1200, any of, any combination of, or all of which may be in plural or may include plural components thereof.

The processor 1100 may be a central processing unit (CPU) or a semiconductor device that processes instructions stored in a storage medium, including the memory 1300 and/or the storage 1600. The memory 1300 and the storage 1600 may include various types of volatile or non-volatile storage media. For example, the memory 1300 may include a read only memory (ROM) 1310 and a random access memory (RAM) 1320.

Accordingly, the operations of a method or algorithm described in connection with an embodiments disclosed in the specification may be directly implemented with a hardware module, a software module, or a combination of the hardware module and the software module, which can be executed by the processor 1100. The software module may reside on a storage medium (that is, the memory 1300 and/or the storage 1600) such as a RAM, a flash memory, a ROM, an EPROM, an EEPROM, a register, a hard disc, a removable disk, and a CD-ROM.

The example storage medium may be coupled to the processor 1100. The processor 1100 may read out information from the storage medium and may write information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

According to an embodiment of the present disclosure, the flight control apparatus may determine a position of mobility apparatus, based on an image around the mobility apparatus, and may determine a flight position of the mobility apparatus, even when there is a defect in GPS signal or it is impossible to receive a GPS signal.

According to an embodiment of the present disclosure, the flight control apparatus may determine whether the mobility apparatus departs from a course and may return the mobility apparatus to a normal course, even when it is impossible to determine a position using a GPS signal.

Various effects ascertained directly or indirectly through the present disclosure may be provided.

Although the present disclosure has been described with reference to example embodiments and the accompanying drawings, the present disclosure is not necessarily limited thereto, but may be variously modified and altered by those skilled in the art to which the present disclosure pertains without departing from the spirit and scopes of the present disclosure claimed in the following claims.

Therefore, example embodiments of the present disclosure are not intended to necessarily limit the technical spirit of the present disclosure, and are provided for illustrative purposes. The scopes of the present disclosure can be construed on the basis of the accompanying claims, and technical ideas within the scopes equivalent to the claims can be included in the scopes of the present disclosure.

**Claims**

1. An apparatus for controlling a mobility apparatus, the apparatus comprising:

an imaging device on the mobility apparatus;
at least one processor communicably coupled to the imaging device; and
a storage medium storing computer-readable instructions that, when executed by the at least one processor, enable the at least one processor to:

detect a reference object from an image obtained by the imaging device in response to certain non-image-based position information of the mobility apparatus being unavailable,
obtain image-based position information of the mobility apparatus based on a relative position of the mobility apparatus with respect to the reference object, and
determine whether the mobility apparatus departs from a course based on the image-based position information of the mobility apparatus.

2. The apparatus of claim 1, wherein the instructions further enable the at least one processor to:

detect objects from the image; and
determine a landmark to which a coordinates value is matched among the objects as the reference object.

3. The apparatus of claim 1 or 2, wherein the instructions further enable the at least one processor to:

transform the image into a top-view image; and
determine the relative position of the mobility apparatus with respect to the reference object on the top-view image.

4. The apparatus of claim 3, wherein the instructions further enable the at least one processor to:

determine a height of the mobility apparatus from a ground on which the reference object is located on the top-view image; and
determine the relative position of the mobility apparatus with respect to the reference object, based on determining an x-axis separation distance and a y-axis separation distance from the reference object to the mobility apparatus.

5. The apparatus of claim 4, wherein the instructions further enable the at least one processor to determine position coordinates of the mobility apparatus on the top-view image, based on the height of the mobility apparatus, the x-axis separation distance, and the y-axis separation distance.

6. The apparatus of anyone of claims 1-5, wherein the instructions further enable the at least one processor to:

obtain a first straight line based on first and second reference points matched to a reference target;
obtain a second straight line based on third and fourth reference points matched to the reference target; and
determine whether the mobility apparatus departs from the course based on determining an area in the first straight line and the second straight line as the course.

7. The apparatus of claim 6 provided that in combination with one of claims 3-5, wherein the instructions further enable the at least one processor to determine whether the mobility apparatus departs from the course based on that a first x-intercept of the first straight line and a second x-intercept of the second straight line are a same sign, in response to setting a position of the mobility apparatus to an origin on the top-view image.

8. The apparatus of claim 6 or 7, wherein the instructions further enable the at least one processor to:

determine a center line connecting x-axis average values of the first straight line and the second straight line;
control the mobility apparatus to turn in a first direction toward the center line during a first duration;
control the mobility apparatus to turn in a second direction which is opposite to the first direction during a second duration; and
control the mobility apparatus to perform straight line motion along the center line from a return point at which the mobility apparatus reaches the center line.

9. The apparatus of claim 8, wherein the instructions further enable the at least one processor to set a first section in which the mobility apparatus turns in the first direction and a second section in which the mobility apparatus turns in the second direction to be equivalent to each other.

10. The apparatus of anyone of claims 1-9, wherein the instructions further enable the at least one processor to provide a notification to a display of the image-based position information of the mobility apparatus that obtains the image and the course.

11. A method for controlling a mobility apparatus, the method comprising:

detecting a reference object from an image obtained by an imaging device of the mobility apparatus, in response to certain non-image-based position information of the mobility apparatus being unavailable;
determining a relative position of the mobility apparatus with respect to the reference object;
obtaining image-based position information of the mobility apparatus, based on the relative position of the mobility apparatus with respect to the reference object; and
determining whether the mobility apparatus departs from a course, based on the image-based position information of the mobility apparatus.

12. The method of claim 11, wherein the detecting of the reference object comprises:

detecting objects from the image; and
extracting a landmark to which a coordinates value is matched among the objects.

13. The method of claim 11 or 12, wherein the determining of the relative position with respect to the reference object comprises:

transforming the image into a top-view image; and
determining the relative position on the top-view image.

14. The method of claim 13, wherein the determining of the relative position with respect to the reference object comprises:

determining a height of the mobility apparatus from a ground on which the reference object is located on the top-view image; and
determining an x-axis separation distance and a y-axis separation distance from the reference object to the mobility apparatus.

15. The method of claim 14, wherein the obtaining of the image-based position information of the mobility apparatus comprises determining position coordinates of the mobility apparatus on the top-view image, based on the height of the mobility apparatus, the x-axis separation distance, and the y-axis separation distance.

AIR MOBILITY
AM

FLIGHT CONTROL APPARATUS
100

CAMERA
10

IMAGE →

SENSOR
DEVICE
20

POSITION
INFORMATION/
FLIGHT STATE
INFORMATION →

PROCESSOR
30

FLIGHT
POSITION
DETERMINATION
INFORMATION →

FCC
50

MEMORY
40

FIG.1

FIG.2

START

DETECT REFERENCE OBJECT, IN RESPONSE TO THAT IT IS IMPOSSIBLE TO IDENTIFY POSITION INFORMATION — S310

OBTAIN POSITION INFORMATION OF AIR MOBILITY, BASED ON RELATIVE POSITION BETWEEN REFERENCE OBJECT AND AIR MOBILITY — S320

DETERMINE WHETHER AIR MOBILITY DEPARTS FROM COURSE, BASED ON POSITION INFORMATION OF AIR MOBILITY — S330

END

FIG.3

FIG.4

FIG.5

FIG.6

(a)

(b)

FIG.7

FIG.8

FIG.9

FIG.10

1000

1300

1400

MEMORY

1100

USER INTERFACE
INPUT DEVICE

1310    1320

1500

ROM     RAM

PROCESSOR

USER INTERFACE
OUTPUT DEVICE

1200

1600

1700

STORAGE

NETWORK
INTERFACE

FIG.11

Europäisches
Patentamt

European
Patent Office

Office européen
des brevets

# EUROPEAN SEARCH REPORT

**Application Number**

EP 24 21 5134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 564 034 A (FUJIANG INTELLIGENT CONTROL XIAMEN INTELLIGENT SCIENCE AND TECH LIMITE) 31 May 2022 (2022-05-31) * description related to figures 1-12; figures 1-14 * | 1-9, 11-15 | INV. G01C11/02 G01C11/04 G01S17/02 G06T7/73 G06V10/40 |
| X | US 2021/319709 A1 (ROSE ROBERT W [US] ET AL) 14 October 2021 (2021-10-14) * passages of the description related to figures 1-5, in particular 0024, 0041, 0086; paragraph [0003]; figures 1-5 * | 1-15 | G06V10/82 G06V20/56 G08G5/54 G08G5/55 G08G5/57 |

**TECHNICAL FIELDS SEARCHED (IPC)**

G01C
B64C
G01S
G06T
G06V
B64U
G08G

The present search report has been drawn up for all claims

| Place of search | Date of completion of the search | Examiner |
|---|---|---|
| The Hague | 10 May 2025 | Philipp, Martine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 5134

This annex lists the patent family members relating to the patent documents cited in  the above-mentioned European search report.
The members are as contained in the European Patent Office EDP file on
The European Patent Office is in no way liable for these particulars which are merely given for the purpose of information.

10-05-2025

| Patent document cited in search report | | Publication date | Patent family member(s) | Publication date |
|---|---|---|---|---|
| CN 114564034 | A | 31-05-2022 | NONE | |
| US 2021319709 | A1 | 14-10-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240077737